# FASCICULE DE BREVET EUROPEEN

(11) **EP 3 482 437 B1**
(45) Date de publication et mention de la délivrance du brevet: **08.04.2020**
(21) Numéro de dépôt: 17745421.2
(22) Date de dépôt: 03.07.2017
(51) Int. Cl.: H01M 8/0226, H01M 8/0243, H01M 4/86, H01M 4/88, H01M 4/90, H01M 8/1004, H01M 8/1018

(54) **PILE À COMBUSTIBLE COMPRENANT UN ASSEMBLAGE MEMBRANE/ÉLECTRODES INCLUANT UNE COUCHE CAPACITIVE**
BRENNSTOFFZELLE BEINHALTEND EINE MEMBRAN/ELEKTRODEN EINHEIT UND EINSCHLIESSLICH EINE KAPAZITIVE SCHICHT
FUEL CELL COMPRISING A MEMBRANE ELECTRODE ASSEMBLY INCLUDING A CAPACITIVE LAYER

(30) Priorité: 06.07.2016 FR 1656468
(43) Date de publication de la demande: 15.05.2019
(73) Titulaire: Commissariat à l'Energie Atomique et aux Energies Alternatives, 75015 Paris (FR)
(72) Inventeur: VINCENT, Rémi, 38000 GRENOBLE (FR); BOLLOLI, Marco, 38100 GRENOBLE (FR); DECOOPMAN, Benjamin, 62840 NEUVE-CHAPELLE (FR); ROSINI, Sébastien, 38100 GRENOBLE (FR)
(74) Mandataire: GIE Innovation Competence Group
(86) Numéro de dépôt international: PCT/FR2017/051805
(87) Numéro de publication internationale: WO 2018/007743

(56) Documents cités:
- EP-A1- 1 986 258
- EP-A1- 2 704 241
- EP-A2- 1 806 803
- US-A1- 2011 311 897

## Description

L'invention concerne les piles à combustible, et plus particulièrement les piles à combustibles incluant des plaques bipolaires entre lesquelles est disposé un assemblage membrane/électrodes à membrane échangeuse de protons.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME. La membrane comporte généralement à sa périphérie deux renforts fixés sur des faces respectives de cette membrane.

Au niveau de l'anode, du dihydrogène utilisé comme carburant est ionisé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires comprennent aussi des canaux d'écoulement pour guider du liquide de refroidissement évacuant la chaleur produite. Les produits de réaction et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment. Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Une conduction électronique est réalisée à travers les plaques bipolaires, une conduction ionique étant obtenue à travers la membrane. Des couches de diffusion gazeuse sont interposées entre les électrodes et les plaques bipolaires et sont en contact avec les plaques bipolaires.

Certaines conceptions de plaques bipolaires utilisent des zones d'homogénéisation pour raccorder des collecteurs d'entrée et de sortie aux différents canaux d'écoulement des plaques bipolaires. De telles zones d'homogénéisation sont généralement dépourvues d'électrodes. Les réactifs sont amenés au contact des électrodes à partir de collecteurs d'entrée et les produits sont évacués à partir de collecteurs de sortie connectés aux différents canaux d'écoulement. Les collecteurs d'entrée et les collecteurs de sortie traversent généralement l'épaisseur de l'empilement de part en part.

Les piles à combustible sont généralement limitées par un courant maximum de fonctionnement qu'elles peuvent fournir à une charge électrique. Ce courant maximum est un paramètre du dimensionnement de la pile à combustible. Ce paramètre influe ainsi sur l'encombrement, le poids et le coût de la pile à combustible. Selon l'utilisation de la pile à combustible, la gestion de pics d'appels de courant transitoires peut ainsi nécessiter un dimensionnement excessif par rapport au courant moyen d'usage de la pile à combustible.

Par ailleurs, certains phénomènes peuvent conduire à la dégradation des performances de la pile à combustible durant son fonctionnement ou du fait de la dégradation irréversible de matériaux formant la cathode. Les cycles d'arrêt/démarrage sont notamment une source de dégradation de l'assemblage membrane/électrodes AME. L'injection d'hydrogène au démarrage combinée à une présence d'air à l'anode induit une division en une zone active et une zone passive. Le fonctionnement est normal dans la zone active. Mais des courants inverses sont générés dans la partie passive, ce qui engendre une corrosion d'un matériau de support de la cathode, en particulier lorsqu'il est en nanomatériau de carbone. Un phénomène similaire se produit à l'arrêt, plus particulièrement si de l'oxygène ou de l'air sont injectés dans la pile à combustible.

Pour surmonter une partie de ces problèmes, le document US604848 a proposé l'inclusion d'une capacité dans la pile à combustible, afin de pouvoir notamment fournir un pic de courant transitoire, ou de pouvoir fournir un courant en cas de pénurie de combustible. Ce document décrit l'inclusion d'une combinaison de matériaux spécifique sur les électrodes de l'AME. Un matériau hydrophobe permet le passage du gaz et est combiné à un matériau hydrophile permettant d'assurer le transport d'eau.

Cependant, le chargement en catalyseur est normalement plus élevé au niveau cathodique qu'au niveau anodique : la réaction de réduction de l'oxygène à la cathode est en effet plus difficile à réaliser que la réaction d'oxydation de l'hydrogène à l'anode. On a alors tendance à disposer d'une capacité cathodique plus élevée que la capacité anodique.

Lors de la décharge des capacités, les charges présentes à une électrode sont transférées vers l'autre électrode. Les capacités doivent donc être identiques à l'anode et à la cathode pour optimiser l'utilisation de ces capacités. Pour équilibrer les capacités à l'anode et à la cathode, il est alors nécessaire d'accroître la capacité à l'anode, en accroissant par exemple l'épaisseur de sa couche combinant le matériau hydrophile et le matériau hydrophobe. Une telle couche engendre cependant des pertes électriques par augmentation de la résistance de contact.

Le document US2011/0311897 décrit une structure de pile à combustible avec un assemblage membrane/électrodes disposant d'une zone de liaison avec une couche de diffusion gazeuse hydrophobe en PTFE. Avec un chargement en catalyseur plus élevé au niveau de la cathode par rapport à l'anode, on est obligé d'augmenter l'épaisseur de la cathode pour équilibrer la capacité de l'anode et de la cathode. Une telle augmentation de l'épaisseur engendre des pertes électriques par augmentation de la résistance de contact.

L'invention vise à résoudre un ou plusieurs de ces inconvénients. L'invention porte ainsi sur une pile à combustible, telle que définie dans la revendication 1 annexée.

L'invention porte également sur les variantes définies dans les revendications dépendantes. L'homme du métier comprendra que chacune des caractéristiques des variantes des revendications dépendantes peut être combinée indépendamment aux caractéristiques de la revendication 1, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des collecteurs d'écoulement à travers l'empilement ;
- les figures 3 et 4 sont des vues de dessus d'un assemblage membrane/électrodes selon un exemple de mode de réalisation de l'invention ;
- la figure 5 est une vue en coupe transversale d'une pile à combustible incluant un assemblage membrane/électrodes selon la figure 3;
- la figure 6 est une vue en coupe transversale d'une pile à combustible incluant une variante d'assemblage membrane/électrodes ;
- la figure 7 est une vue en coupe transversale d'une pile à combustible incluant une autre variante d'assemblage membrane/électrodes ;
- la figure 8 est une vue en coupe longitudinale d'une pile à combustible selon une déclinaison de la figure 6 ;
- la figure 9 est une vue en coupe longitudinale d'une pile à combustible selon une autre déclinaison de la figure 6.

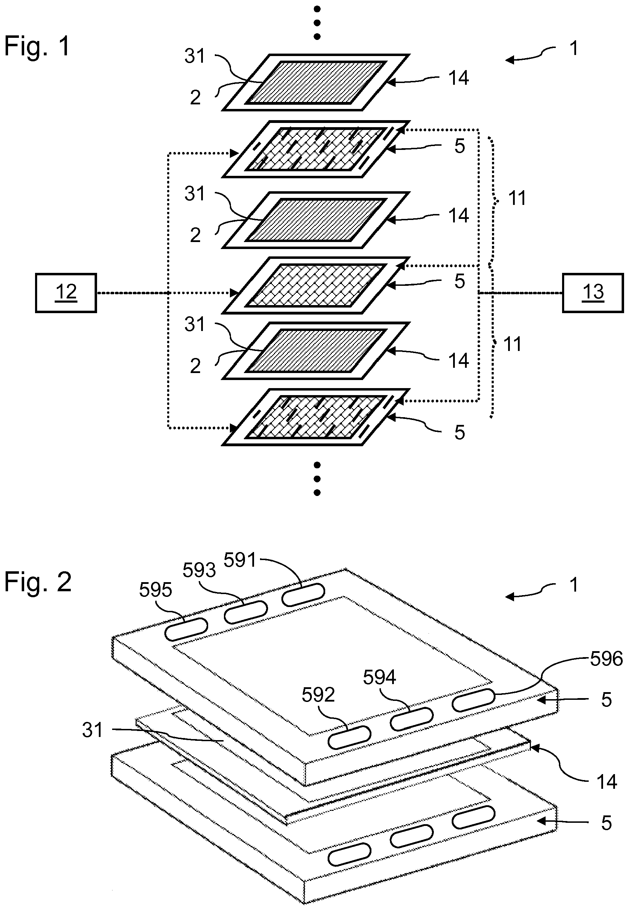

La figure 1 est une vue en perspective éclatée schématique d'un empilement de cellules 11 d'une pile à combustible 1. La pile à combustible 1 comprend plusieurs cellules 11 superposées. Les cellules 11 sont du type à membrane échangeuse de protons ou membrane à électrolyte polymère.

La pile à combustible 1 comprend une source de carburant 12. La source de carburant 12 alimente ici en dihydrogène une entrée de chaque cellule 11. La pile à combustible 1 comprend également une source de comburant 13. La source de comburant 13 alimente ici en air une entrée de chaque cellule 11, l'oxygène de l'air étant utilisé comme oxydant. Chaque cellule 11 comprend également des canaux d'échappement. Une ou plusieurs cellules 11 présentent également un circuit de refroidissement.

Chaque cellule 11 comprend un assemblage membrane/électrodes 14 ou AME 14. Un assemblage membrane/électrodes 14 comprend un électrolyte 2, une anode 31 et une cathode (non illustrée) placées de part et d'autre de l'électrolyte et fixées sur cet électrolyte 2. La couche d'électrolyte 2 forme une membrane semi-perméable permettant une conduction protonique tout en étant imperméable aux gaz présents dans la cellule. La couche d'électrolyte empêche également un passage des électrons entre l'anode 31 et la cathode.

Entre chaque couple d'AME adjacents, une plaque bipolaire 5 est disposée. Chaque plaque bipolaire 5 définit des canaux d'écoulement anodiques et des canaux d'écoulement cathodiques. Des plaques bipolaires 5 définissent également des canaux d'écoulement de liquide de refroidissement entre deux assemblages membrane/électrodes successifs.

De façon connue en soi, durant le fonctionnement de la pile à combustible 1, de l'air s'écoule entre une AME et une plaque bipolaire 5, et du dihydrogène s'écoule entre cette AME et une autre plaque bipolaire 5. Au niveau de l'anode, le dihydrogène est ionisé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 1. L'empilement des plaques bipolaires 5 et des assemblages membrane/électrodes 14 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 14. Les AME 14 comportent des renforts (non illustrés) à leur périphérie.

Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 591 sert par exemple pour former un collecteur d'alimentation en carburant, l'orifice 592 sert par exemple pour former un collecteur d'évacuation de résidus de combustion, l'orifice 594 sert par exemple pour former un collecteur d'alimentation en liquide de refroidissement, l'orifice 593 sert par exemple pour former un collecteur d'évacuation de liquide de refroidissement, l'orifice 596 sert par exemple pour former un collecteur d'alimentation en comburant, et l'orifice 595 sert par exemple pour former un collecteur d'évacuation d'eau de réaction.

Les orifices des plaques bipolaires 5 et des assemblages membrane/électrodes 14 (soit les orifices ménagés dans les renforts non illustrés) sont disposés en vis-à-vis afin de former les différents collecteurs d'écoulement.

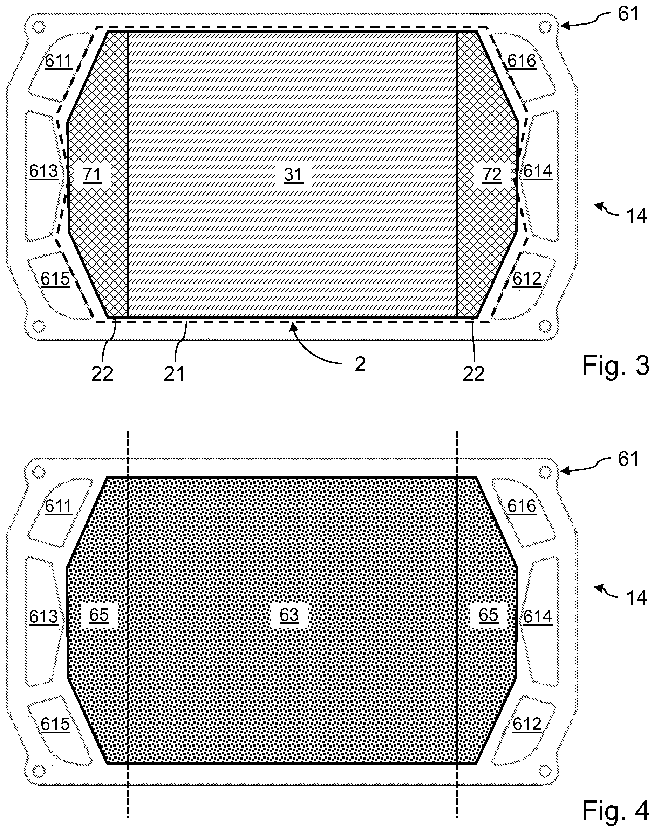

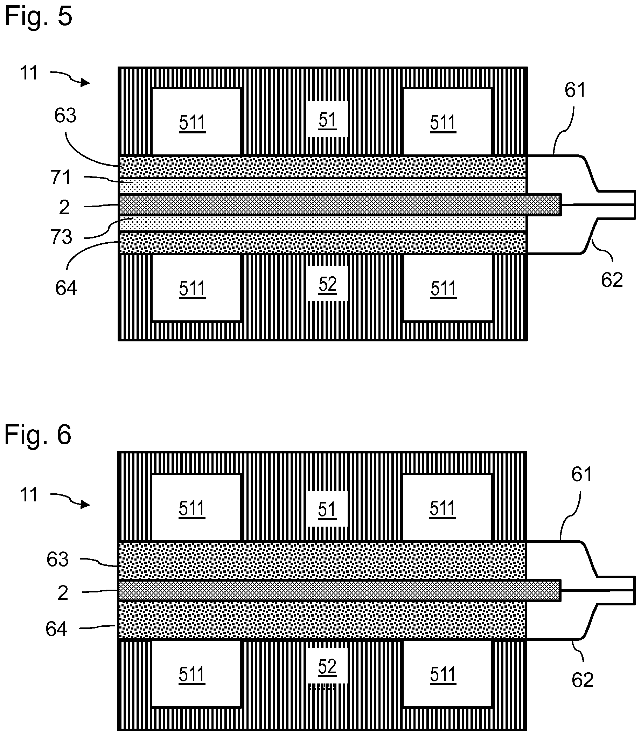

La figure 3 est une vue de dessus d'un assemblage membrane/électrodes 14 selon un exemple de mode de réalisation de l'invention en l'absence de couche de diffusion gazeuse. La figure 4 est une vue de dessus de l'assemblage membrane/électrodes 14 de la figure 3, muni d'une couche de diffusion gazeuse 63. La figure 5 est une vue en coupe d'une cellule 11 de pile à combustible, incluant un tel assemblage membrane/électrodes 14, au niveau d'un bord latéral d'une zone de liaison.

L'assemblage membrane/électrodes 14 inclut la membrane 2, une anode 31 et une cathode (non illustrée) solidarisées de part et d'autre de la membrane 2. La composition et la structure de l'anode 31 et de la cathode sont connues en soi de l'homme du métier et ne seront pas davantage détaillées. L'assemblage membrane/électrodes 14 inclut en outre des renforts 61 et 62. Les renforts 61 et 62 sont fixés à la périphérie de faces respectives de la membrane 2.

Le renfort 61 comporte ailleurs des orifices 611, 613 et 615 ménagés de côté par rapport à une ouverture médiane non référencée. Les orifices 611, 613 et 615 sont destinés à être positionnés en regard des orifices 591, 593 et 595 des plaques bipolaires 51 et 52 détaillées par la suite. Le renfort 61 comporte des orifices 612, 614 et 616 ménagés à l'opposée des orifices 611, 613 et 615, par rapport à l'ouverture médiane. Les orifices 612, 614 et 616 sont destinés à être positionnés en regard des orifices 592, 594 et 596 des plaques bipolaires 51 et 52.

Une couche de diffusion gazeuse 63 est en contact avec l'anode 31 à travers un orifice médian ménagé à travers le renfort 61. Une couche de diffusion gazeuse inférieure (non illustrée) est en contact avec la cathode à travers un orifice médian ménagé à travers le renfort 62.

L'anode 31 définit une zone active 21 dans laquelle intervient la réaction électrochimique anodique. Une plaque bipolaire 51 fait face à la couche de diffusion gazeuse 63 et comporte des canaux d'écoulement 511 pour guider un carburant tel que du dihydrogène jusqu'à la zone active 21. Le collecteur 591 est ainsi en communication avec d'autres canaux d'écoulement de la plaque bipolaire 51, ménagés dans la zone active. Une zone de liaison ou zone d'homogénéisation 22 est ménagée entre la zone active 21 et les collecteurs d'écoulement 592, 594 et 596. Une autre zone de liaison ou zone d'homogénéisation 22 est ménagée entre la zone active 21 et les collecteurs d'écoulement 591, 593 et 595. Une zone de liaison 22 est destinée de façon connue en soi à homogénéiser l'écoulement de carburant entre le collecteur 591 et les canaux d'écoulement anodiques, l'autre zone de liaison 22 étant destinée à homogénéiser l'écoulement anodique de sortie. Les zones de liaison 22 débutent au niveau des extrémités longitudinales de l'anode 31.

Une autre plaque bipolaire 52 fait face à la couche de diffusion gazeuse 64 et comporte des canaux d'écoulement pour guider un comburant tel que de l'air jusqu'à la zone active cathodique. La cathode définit une zone active dans laquelle intervient la réaction électrochimique cathodique. Une zone de liaison ou zone d'homogénéisation est ménagée entre la zone active cathodique et les collecteurs d'écoulement 592, 594 et 596, une autre zone de liaison étant ménagée entre la zone active cathodique et les collecteurs d'écoulement 591, 593 et 595. Une zone de liaison est destinée de façon connue en soi à homogénéiser l'écoulement de comburant entre les canaux d'écoulement cathodique et le collecteur 596. L'autre zone de liaison est destinée de façon connue en soi à homogénéiser l'écoulement entre les canaux d'écoulement cathodique et le collecteur de sortie 595.

Dans un souci de simplification, les canaux d'écoulement de liquide de refroidissement (optionnels) à travers les plaques bipolaires 51 et 52 ne sont pas illustrés.

L'assemblage membrane/électrodes 14 comporte en outre une couche capacitive 71 sur une zone de liaison 22, et une couche capacitive 72 sur une autre zone de liaison 22. Avantageusement, les couches capacitives 71 et 72 occupent la majeure partie de la surface de leur zone de liaison 22 respective, afin d'optimiser la capacité intégrée dans la pile à combustible 1.

Les couches capacitives 71 et 72 sont en contact électrique avec la plaque bipolaire 51, de façon à pouvoir se décharger/recharger au besoin. Pour présenter une capacité optimale, les couches capacitives 71 et 72 incluent un mélange de carbone présentant une surface spécifique BET au moins égale à 200 m²/g et d'un matériau conducteur protonique, avantageusement au moins égale à 500m²/g, voire au moins égale à 700m²/g. Un tel carbone présente une haute surface spécifique afin de pouvoir stocker un maximum de charges. Le matériau conducteur protonique est destiné à favoriser le transport des protons jusqu'aux sites de stockage des charges dans le carbone.

L'implantation d'une couche capacitive sur une zone de liaison anodique de la membrane 14 permet de réaliser cette couche capacitive sans compromettre la structure et les performances de l'anode 31.

Le carbone du mélange pourra par exemple être du noir de carbone distribué sous la référence commerciale Ketjenblack CJ300 par la société Lion Speciality Chemicals, ou le noir de carbone distribué sous la référence commerciale Acetylene Black AB50X GRIT par la société Chevron Phillips Chemical.

Le conducteur protonique du mélange pourra par exemple être un liant conducteur protonique, par exemple du PFSA tel que commercialisés sous les références commerciales Nafion, Aquivion ou Flemion, du PEEK, ou du polyamine.

Le mélange des couches capacitives 71 et 72 présente avantageusement une proportion en poids de ce carbone au moins égale à 40%, de préférence au moins égale à 55%. Avantageusement la proportion en poids de ce carbone est au plus égale à 80%, voire au plus égale à 65%. Le mélange des couches capacitives 71 et 72 présente avantageusement une proportion en poids du conducteur protonique au moins égale à 20%, de préférence au moins égale à 35%. Avantageusement la proportion en poids du conducteur protonique est au plus égale à 60%, voire au plus égale à 45%.

Dans l'exemple illustré, la couche de diffusion gazeuse 63 comporte des parties 65 débordant longitudinalement de part et d'autre par rapport à la zone réactive 21. Ces parties 65 recouvrent respectivement la couche capacitive 71 et la couche capacitive 72.

Les couches capacitives 71 et 72 présentent avantageusement une épaisseur comprises entre 10 et 50nm dans la configuration illustrée aux figures 3 à 5.

Les couches capacitives 71 et 72 seront avantageusement dimensionnées pour présenter une capacité surfacique au moins égale à 600mF/cm².

Les couches capacitives 71 et 72 sont avantageusement dépourvues de matériau catalyseur, par exemple dépourvue de tout matériau catalyseur présents dans l'anode 31.

L'assemblage membrane/électrodes 14 comporte ici en outre une couche capacitive 73 sur la zone de liaison. Avantageusement, une autre couche capacitive recouvre une autre zone de liaison réalisée sur la membrane 2, à l'opposée de la zone de liaison par rapport à la cathode.

Avantageusement, ces couches capacitives du côté cathodique occupent la majeure partie de la surface de leur zone de liaison respective, afin d'optimiser la capacité intégrée dans la pile à combustible 1.

Afin de présenter un bon équilibrage des couches capacitives du côté anodique et du côté cathodique, les couches capacitives du côté cathodique présentent avantageusement une même composition, une même épaisseur, et/ou une même géométrie que les couches capacitives du côté anodique. Les couches capacitives anodiques et les couches capacitives cathodiques sont ici superposées.

L'électrode 31 et/ou les couches capacitives 71 et 72 peuvent être réalisées par application d'encres sur la membrane 2, par exemple par enduction, sérigraphie ou projection.

La figure 6 est une vue en coupe d'une cellule 11 de pile à combustible, incluant une variante d'assemblage membrane/électrodes 14, au niveau d'un bord latéral d'une zone de liaison. L'assemblage membrane/électrodes 14 inclut la même structure de membrane 2, d'anode et de cathode, de renforts 61 et 62 et de plaques bipolaires 51 et 52 que dans la variante de la figure 3. Dans cette variante, les couches de diffusion gazeuse 63 et 64 présentent la même géométrie que dans la variante de la figure 3. Le mélange de carbone et de conducteur protonique est ici inclus dans les parties des couches de diffusion gazeuse 63 et 64 qui recouvrent les zones de liaison. Le mélange peut par exemple être inclus dans les couches de diffusion gazeuse 63 et 64 par imprégnation. Les couches de diffusion gazeuse 63 et 64 n'incluent avantageusement pas le mélange dans leur zone médiane recouvrant leur zone réactive.

Selon cette variante, on peut inclure une couche capacitive à l'aplomb d'une zone de liaison, sans accroître l'épaisseur de l'empilement au niveau de cette zone de liaison.

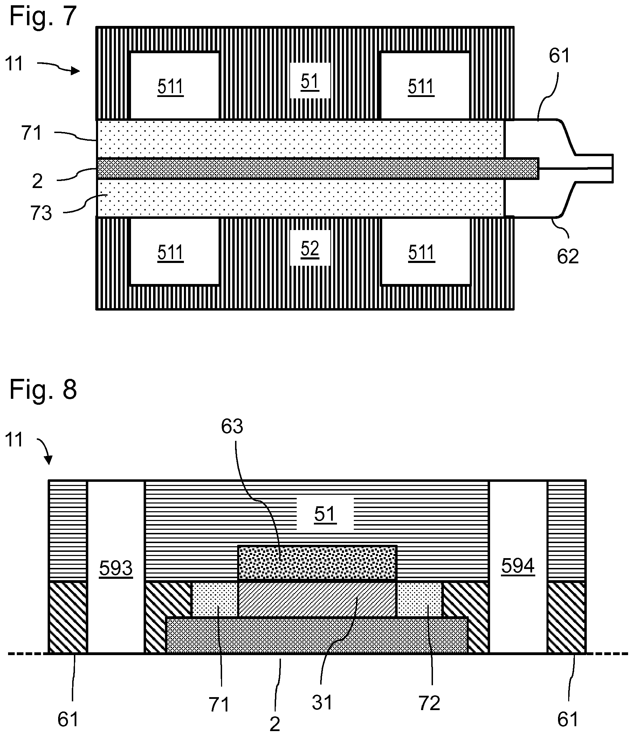

La figure 7 est une vue en coupe d'une cellule 11 de pile à combustible, incluant une autre variante d'assemblage membrane/électrodes 14, au niveau d'un bord latéral d'une zone de liaison. L'assemblage membrane/électrodes 14 inclut la même structure de membrane 2, d'anode et de cathode, de renforts 61 et 62 et de plaques bipolaires 51 et 52 que dans la variante de la figure 3. Dans cette variante, les couches de diffusion gazeuse 63 et 64 recouvrent respectivement l'anode 31 et la cathode. Dans cette variante, les couches de diffusion gazeuse 63 et 64 ne s'étendent pas jusqu'aux zones de liaison, et ne recouvrent donc pas ces zones de liaison.

Le mélange de carbone et de conducteur protonique forme ici une couche, qui s'étend en continu entre la membrane 2 et leur plaque bipolaire respective 51 ou 52.

Selon cette variante, on peut éviter de prolonger les couches de diffusion gazeuse jusque dans les zones de liaison.

La figure 8 est une vue en coupe longitudinale de la partie supérieure d'une cellule 11 selon une autre déclinaison de la variante de la figure 7. Dans cette déclinaison, les couches capacitives 71 et 72 présentent une épaisseur égale à celle de l'anode 31, et donc inférieure à l'épaisseur cumulée de l'anode 31 et de la couche de diffusion gazeuse 63. La plaque bipolaire 51 présente ainsi une zone surélevée en vis-à-vis d'une zone de liaison, afin de compenser cette différence d'épaisseur.

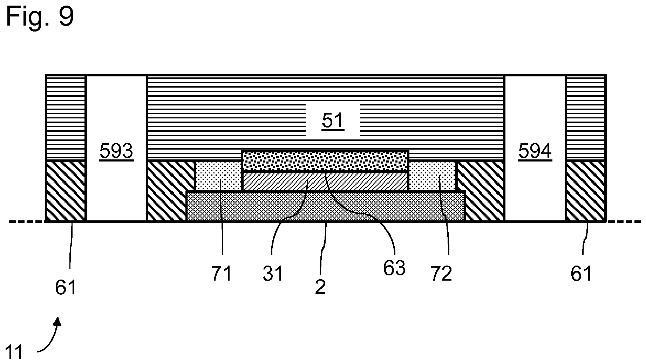

La figure 9 est une vue en coupe longitudinale de la partie supérieure d'une cellule 11 selon une déclinaison de la variante de la figure 7. Dans cette déclinaison, les couches capacitives 71 et 72 présentent une épaisseur supérieure à celle de l'anode 31, mais inférieure à l'épaisseur cumulée de l'anode 31 et de la couche de diffusion gazeuse 63. La plaque bipolaire 51 présente ainsi une zone surélevée en vis-à-vis d'une zone de liaison, afin de compenser cette différence d'épaisseur.

Bien qu'on ait décrit un mode de réalisation avec des couches capacitives dans les zones de liaison de part et d'autre de l'anode, on peut également envisager de ne réaliser une couche capacitive que dans une zone de liaison d'un côté de l'anode.

## Revendications

1. Pile à combustible (1), comprenant :
- un assemblage membrane/électrodes (14) incluant une membrane échangeuse de protons (2), et incluant une anode (31) en contact avec une première face de la membrane, l'assemblage membrane/électrodes (14) comportant une première zone active (21) recouverte par ladite anode (31), et une première zone de liaison (22) non recouverte par ladite anode (31) ;
- des plaques de guidage d'écoulement (51, 52) entre lesquelles l'assemblage membrane/électrodes (14) est disposé, lesdites plaques de guidage d'écoulement étant traversées par au moins un premier collecteur d'écoulement (591) en communication avec ladite anode, ladite première zone de liaison (22) étant disposée entre ledit premier collecteur d'écoulement (591) et la première zone active;
**Caractérisée en ce que** :
- l'assemblage membrane/électrodes (14) comporte en outre une première couche capacitive (71) incluant un mélange de carbone présentant une surface spécifique BET au moins égale à 200m²/g et d'un matériau conducteur protonique, disposée sur ladite première zone de liaison (22).

2. Pile à combustible (1) selon la revendication 1, comprenant en outre une couche de diffusion gazeuse (63) positionnée entre ladite anode (31) et une desdites plaques de guidage d'écoulement (51).

3. Pile à combustible (1) selon la revendication 2, dans laquelle ladite couche de diffusion gazeuse (63) comporte une partie recouvrant ladite première zone de liaison (22), cette partie de la couche de diffusion gazeuse incluant ledit mélange de matériau conducteur protonique et de carbone.

4. Pile à combustible (1) selon la revendication 2, dans laquelle ladite couche de diffusion gazeuse ne recouvre pas ladite première zone de liaison (22), ledit mélange de matériau conducteur protonique et de carbone s'étendant en continu entre ladite membrane (2) et une desdites plaque de guidage d'écoulement.

5. Pile à combustible (1) selon l'une quelconque des revendications précédentes, dans laquelle :
- l'assemblage membrane/électrodes (14) inclut une cathode en contact avec une deuxième face de la membrane (2) ;
- l'assemblage membrane/électrodes (14) comporte une deuxième zone active recouverte par ladite cathode et une deuxième zone de liaison non recouverte par ladite cathode ;
- lesdites plaques de guidage d'écoulement sont traversées par au moins un deuxième collecteur d'écoulement (595) en communication avec ladite cathode ;
- la deuxième zone de liaison est disposée entre ledit deuxième collecteur d'écoulement (595) et la deuxième zone active ;
- l'assemblage membrane/électrodes (14) comporte en outre une deuxième couche capacitive (73) incluant un mélange identique à celui de la première couche capacitive (71) et disposé sur ladite deuxième zone de liaison.

6. Pile à combustible (1) selon l'une quelconque des revendications précédentes, dans laquelle la première couche capacitive (71) présente une épaisseur comprise entre 10 et 150µm.

7. Pile à combustible (1) selon l'une quelconque des revendications précédentes, dans laquelle ladite première couche capacitive (71) est dépourvue de catalyseur.

8. Pile à combustible (1) selon l'une quelconque des revendications précédentes, dans laquelle ladite première couche capacitive (71) comprend une proportion en poids dudit matériau conducteur protonique comprise entre 20 et 60%, et une proportion en poids dudit carbone comprise entre 40 et 80%.

9. Pile à combustible (1) selon la revendication 8, dans laquelle ladite première couche capacitive (71) comprend une proportion en poids dudit matériau conducteur protonique comprise entre 35 et 45%, et une proportion en poids dudit carbone comprise entre 45 et 55%.

10. Pile à combustible (1) selon l'une quelconque des revendications précédentes, dans laquelle ledit carbone est du noir de carbone.

11. Pile à combustible (1) selon l'une quelconque des revendications précédentes, dans laquelle ladite première couche capacitive (71) présente une capacité surfacique au moins égale à 600mF/cm².

12. Pile à combustible (1) selon l'une quelconque des revendications précédentes, dans laquelle l'assemblage membrane/électrodes (14) comporte une couche de renfort (61) solidarisée à la membrane (2) et entourant ladite première couche capacitive (71).

## Patentansprüche

1. Brennstoffzelle (1), umfassend:
- eine Membran/Elektroden-Anordnung (14), die eine Protonenaustauschmembran (2) beinhaltet, wobei sie weiterhin eine Anode (31) beinhaltet, welche mit einer ersten Seite der Membran in Kontakt ist, wobei die Membran/ElektrodenAnordnung (14) einen ersten aktiven Bereich (21) aufweist, der von der Anode (31) bedeckt wird, sowie einen ersten Verbindungsbereich (22), der nicht von der Anode (31) bedeckt wird;
- Strömungslenkplatten (51, 52), zwischen denen die Membran/ElektrodenAnordnung (14) angeordnet ist, wobei sich mindestens ein erster Strömungssammler (591), welcher mit der Anode in Verbindung steht, durch die Strömungslenkplatten erstreckt, wobei der erste Verbindungsbereich (22) zwischen dem ersten Strömungssammler (591) und dem ersten aktiven Bereich angeordnet ist;
**dadurch gekennzeichnet, dass**:
- die Membran/Elektroden-Anordnung (14) darüber hinaus eine erste kapazitive Schicht (71) aufweist, die ein Gemisch aus Kohlenstoff, welcher eine spezifische BET-Oberfläche von mindestens 200 m²/g aufweist, und aus einem protonenleitenden Material aufweist, wobei sie auf dem ersten Verbindungsbereich (22) angeordnet ist.

2. Brennstoffzelle (1) gemäß Anspruch 1, wobei sie darüber hinaus eine Gasdiffusionsschicht (63) umfasst, die zwischen der Anode (31) und einer der Strömungslenkplatten (51) angeordnet ist.

3. Brennstoffzelle (1) gemäß Anspruch 2, wobei die Gasdiffusionsschicht (63) einen Abschnitt aufweist, der den ersten Verbindungsbereich (22) bedeckt, wobei dieser Abschnitt der Gasdiffusionsschicht das Gemisch aus protonenleitendem Material und aus Kohlenstoff beinhaltet.

4. Brennstoffzelle (1) gemäß Anspruch 2, wobei die Gasdiffusionsschicht den ersten Verbindungsbereich (22) nicht bedeckt, wobei das Gemisch aus protonenleitendem Material und aus Kohlenstoff sich durchgehend zwischen der Membran (2) und einer der Strömungslenkplatten erstreckt.

5. Brennstoffzelle (1) nach einem beliebigen der vorhergehenden Ansprüche, wobei:
- die Membran/Elektroden-Anordnung (14) eine Kathode beinhaltet, die mit einer zweiten Seite der Membran (2) in Kontakt ist;
- die Membran/Elektroden-Anordnung (14) einen zweiten aktiven Bereich aufweist, der von der Kathode bedeckt wird, sowie einen zweiten Verbindungsbereich, der nicht von der Kathode bedeckt wird;
- sich mindestens ein zweiter Strömungssammler (595) durch die Strömungslenkplatten erstreckt, wobei er mit der Kathode in Verbindung steht;
- der zweite Verbindungsbereich zwischen dem zweiten Strömungssammler (595) und dem zweiten aktiven Bereich angeordnet ist;
- die Membran/Elektroden-Anordnung (14) darüber hinaus eine zweite kapazitive Schicht (73) aufweist, die ein Gemisch beinhaltet, das mit demjenigen der ersten kapazitiven Schicht (71) identisch ist, wobei es auf dem zweiten Verbindungsbereich angeordnet ist.

6. Brennstoffzelle (1) nach einem beliebigen der vorhergehenden Ansprüche, wobei die erste kapazitive Schicht (71) eine Dicke im Bereich von 10 bis 150 µm aufweist.

7. Brennstoffzelle (1) nach einem beliebigen der vorhergehenden Ansprüche, wobei die erste kapazitive Schicht (71) über keinerlei Katalysator verfügt.

8. Brennstoffzelle (1) nach einem beliebigen der vorhergehenden Ansprüche, wobei die erste kapazitive Schicht (71) einen gewichtsmäßigen Anteil des protonenleitenden Materials im Bereich von 20 bis 60 % und einen gewichtsmäßigen Anteil des Kohlenstoffs im Bereich von 40 bis 80 % umfasst.

9. Brennstoffzelle (1) nach Anspruch 8, wobei die erste kapazitive Schicht (71) einen gewichtsmäßigen Anteil des protonenleitenden Materials im Bereich von 35 bis 45 % und einen gewichtsmäßigen Anteil des Kohlenstoffs im Bereich von 45 bis 55 % umfasst.

10. Brennstoffzelle (1) nach einem beliebigen der vorhergehenden Ansprüche, wobei es sich bei dem Kohlenstoff um Ruß handelt.

11. Brennstoffzelle (1) nach einem beliebigen der vorhergehenden Ansprüche, wobei die erste kapazitive Schicht (71) eine oberflächenbezogene Kapazität von mindestens 600 mF/cm² aufweist.

12. Brennstoffzelle (1) nach einem beliebigen der vorhergehenden Ansprüche, wobei die Membran/Elektroden-Anordnung (14) eine Verstärkungsschicht (61) aufweist, die fest mit der Membran (2) verbunden ist und die erste kapazitive Schicht (71) umgibt.

## Claims

1. Fuel cell (1), comprising:
- a membrane/electrode assembly (14), including a proton exchange membrane (2), and including an anode (31) in contact with a first face of the membrane, the membrane/electrode assembly (14) comprising a first active zone (21) covered by said anode (31), and a first linking zone (22) not covered by said anode (31);
- flow guiding plates (51, 52), between which the membrane/electrode assembly (14) is arranged, said flow guiding plates being traversed by at least one first flow collector (591) in communication with said anode, said first linking zone (22) being arranged between said first flow collector (591) and the first active zone;
**characterized in that**:
- the membrane/electrode assembly (14) further comprises a first capacitive layer (71) including a mixture of carbon having a BET specific surface area at least equal to 200 m²/g and of a proton-conducting material, arranged on said first linking zone (22).

2. Fuel cell (1) according to Claim 1, further comprising a gas diffusion layer (63) positioned between said anode (31) and one of said flow guiding plates (51).

3. Fuel cell (1) according to Claim 2, in which said gas diffusion layer (63) comprises a portion covering said first linking zone (22), this portion of the gas diffusion layer including said mixture of proton-conducting material and of carbon.

4. Fuel cell (1) according to Claim 2, in which said gas diffusion layer does not cover said first linking zone (22), said mixture of proton-conducting material and of carbon extending continuously between said membrane (2) and one of said flow guiding plates.

5. Fuel cell (1) according to any one of the preceding claims, in which:
- the membrane/electrode assembly (14) includes a cathode in contact with a second face of the membrane (2);
- the membrane/electrode assembly (14) comprises a second active zone covered by said cathode and a second linking zone not covered by said cathode;
- said flow guiding plates are traversed by at least one second flow collector (595) in communication with said cathode;
- the second linking zone is arranged between said second flow collector (595) and the second active zone;
- the membrane/electrode assembly (14) further comprises a second capacitive layer (73) including a mixture identical to that of the first capacitive layer (71) and arranged on said second linking zone.

6. Fuel cell (1) according to any one of the preceding claims, in which the first capacitive layer (71) has a thickness of between 10 and 150 µm.

7. Fuel cell (1) according to any one of the preceding claims, in which said first capacitive layer (71) lacks catalyst.

8. Fuel cell (1) according to any one of the preceding claims, in which said first capacitive layer (71) comprises a proportion by weight of said proton-conducting material of between 20 and 60%, and a proportion by weight of said carbon of between 40 and 80%.

9. Fuel cell (1) according to Claim 8, in which said first capacitive layer (71) comprises a proportion by weight of said proton-conducting material of between 35 and 45%, and a proportion by weight of said carbon of between 45 and 55%.

10. Fuel cell (1) according to any one of the preceding claims, in which said carbon is carbon black.

11. Fuel cell (1) according to any one of the preceding claims, in which said first capacitive layer (71) has a surface capacitance at least equal to 600 mF/cm².

12. Fuel cell (1) according to any one of the preceding claims, in which the membrane/electrode assembly (14) comprises a reinforcing layer (61) integral with the membrane (2) and surrounding said first capacitive layer (71).
